# EUROPEAN PATENT SPECIFICATION

(11) **EP 4 247 982 B1**
(45) Date of publication and mention of the grant of the patent: **18.12.2024**
(21) Application number: 21806377.4
(22) Date of filing: 25.10.2021
(51) Int. Cl.: C14B 1/62, B25J 15/06, B65G 47/91, C14B 17/06

(54) **DEVICE FOR HANDLING HIDES**
VORRICHTUNG ZUR HANDHABUNG VON HÄUTEN
DISPOSITIF DE MANIPULATION DE PEAUX

(30) Priority: 18.11.2020 IT 202000027609
(43) Date of publication of application: 27.09.2023
(73) Proprietor: COSMOTECH di Trevisan Andrea, 36070 Trissino (VI) (IT)
(72) Inventor: TREVISAN, Andrea, 36070 Trissino (VI) (IT)
(74) Representative: Ziliotto, Tiziano
(86) International application number: PCT/IB2021/059804
(87) International publication number: WO 2022/106935

(56) References cited:
- RU-C1- 2 015 097
- SU-A1- 1 100 314
- SU-A1- 1 280 014
- SU-A1- 1 283 203

## Description

### TECHNICAL FIELD OF THE INVENTION

The present invention concerns a device for handling hides, more specifically for handling hides between different stations in leather processing and/or treatment systems.

### DESCRIPTION OF THE STATE OF THE ART

The need to handle hides between different processing stations is known in the sector of leather processing and/or treatment, in particular in the leather tanning sector, for example for collecting or positioning hides from/in storage areas and/or processing machines intended for a specific treatment.

According to the known technique, the hides can be stored on a machine bed and stacked in a substantially horizontal position or stored on a stand and arranged astride said support/stand, stacked and supported in their central area while their side edges hang laterally according to more or less inclined directions defined by the specific shape of the stand used.

Automated hide handling devices are known which provide for gripping the hide and pulling it between the various stations.

A known device of the type mentioned above is described in the Italian patent application ITVI970172 and comprises suction cups that are positioned on the hide and lift one of its edges so that the latter is held by the action of pliers which hold the hide by exerting a thrusting force against the suction cups. Once the edge has been lifted, a hide supporting rod is inserted under the hide and then moved to the point of destination.

Said handling system has a first drawback related to the compression force which is exerted by the pliers and to which the hide is subjected. Said compression can negatively affect the intrinsic characteristics of the hide, damaging and/or ruining it locally at the level of the gripping points.

For example, the valuable surface of the hide can be damaged by the tip of the pliers which is placed in direct contact with it.

A further drawback is represented by the structural complexity of the system, which needs a plurality of pneumatic cylinders to handle the suction cups and the pliers so as to guarantee the desired gripping force and the correct handling of the hide.

Another drawback lies in the space occupied by said handling means (pneumatic cylinders).

Thus, the hide handling devices of the known type have said drawbacks.

The main object of the present invention, therefore, is to resolve or at least partially overcome the problems that characterize the solutions known in the art. It is one object of the present invention to provide a device for handling hides which makes it possible to act in the least invasive way against the surface of the hide to be handled.

It is another object of the present invention to provide a device for handling hides which has reduced overall dimensions compared to the systems of the known type.

It is a further object of the present invention to provide a device for handling hides with higher holding capacity compared to the systems of the known type. Devices according to the state of the art are known from document SU1280014A1.

### DESCRIPTION OF THE PRESENT INVENTION

The present invention is based on the general consideration that it is possible to provide a device for handling hides comprising a rotary tubular element provided with negative pressure areas where the hide can be gripped.

According to a first aspect of the present invention, the subject of the same is, therefore, a device for handling a hide comprising gripping means suited to grip said hide and moving means suited to move said gripping means, wherein said gripping means comprise:
- a tubular element suited to define an inner cavity and having a portion of external surface suited to be positioned at the level of said hide through said moving means, said tubular element developing longitudinally along a main rotation axis and comprising at least one through hole suited to place said external surface in communication with said inner cavity;
- first rotation means suited to rotate said tubular element around said main axis;
- air suction means suited to act in said inner cavity of said tubular element in order to define at least one negative pressure area on said external surface through said at least one through hole, said negative pressure area defining a gripping surface for said hide;
- air confining means associated with said air suction means and suited to define a suction sector that extends over an angle smaller than 360° around said main axis and inside said inner cavity.

According to a preferred embodiment, the moving means comprise a supporting structure and motorized means suited to move said gripping means along at least one direction.

In a preferred embodiment, said at least one direction comprises at least one of the directions that define a two-dimensional or a three-dimensional space.

Preferably, the motorized means comprise at least one motor driven kinematic mechanism associated with a respective direction of movement, said at least one motor driven kinematic mechanism preferably comprising a rack and pinion system or a belt and pulley system.

According to a preferred embodiment, the device comprises detection means suited to detect the presence of the hide, preferably dimming photocells or a camera.

In a preferred embodiment, the device comprises a central supporting shaft around which said tubular element can rotate.

Preferably, the central shaft is hollow and comprises one or more through openings, said central shaft defining a suction pipe.

According to a preferred embodiment, the suction pipe can be connected to a suction unit, more preferably one end of the suction pipe can be connected to a suction unit.

In a preferred embodiment, the device comprises second rotation means suited to rotate the central supporting shaft.

Preferably, said at least one negative pressure area corresponds to the area of the external surface where said at least one through hole ends.

According to a preferred embodiment, the external surface comprises at least one groove which communicates with said at least one through hole, in such a way that said at least one negative pressure area extends on the groove.

In a preferred embodiment, said at least one groove extends on the external surface according to a direction which is perpendicular to said main axis. Preferably, said groove extends on the external surface in an inclined direction with respect to the main axis, preferably to define a helicoidal development pattern for the groove on the external surface.

Preferably, the tubular element comprises a hollow cylinder.

According to a preferred embodiment, the suction unit comprises a suction pump. Preferably, the angle of the suction sector is adjustable.

According to a second aspect of the present invention, the subject of the same is a system comprising a device for handling a hide between a first area and a second area of said system, wherein the device is made as described above.

According to a preferred embodiment, the first area and/or the second area comprise/s a hide storage station.

In a preferred embodiment, the storage station comprises a plurality of hides stacked on a substantially horizontal supporting area.

In an alternative embodiment, the storage station comprises a plurality of hides stacked on a stand.

According to a preferred embodiment, the hides are supported at the level of their central area while their side edges hang laterally along more or less inclined directions defined by the stand.

### BRIEF DESCRIPTION OF THE FIGURES

Further advantages, objectives and characteristics as well as further embodiments of the present invention are defined in the claims and are clarified below through the following description making reference to the attached drawings; in the drawings, corresponding or equivalent characteristics and/or component parts of the present invention are identified by the same reference numbers. More specifically:
- Figure 1 shows an axonometric view of a hide handling device according to a preferred embodiment of the invention;
- Figure 2 shows a side plan view of the device of Figure 1;
- Figure 2A shows an enlarged detail of Figure 2 including some structural elements;
- Figure 3 shows a plan view of the device of Figure 1;
- Figure 3A shows Figure 3 including some structural elements;
- Figure 4 shows an enlarged detail of Figure 1;
- Figure 4A shows a sectional view of Figure 4;
- Figure 5 shows a sectional view of an enlarged detail of Figure 4;
- Figure 6 shows a sectional view of another enlarged detail of Figure 4;
- Figure 7 shows a plan view of a component of Figure 4 isolated from the rest;
- Figure 7A shows a longitudinal sectional view of Figure 7;
- Figure 8 shows an enlarged detail of Figure 7;
- Figures 8A and 8B show enlarged details of Figure 8;
- Figure 9 shows an axonometric, partial section view of the component of Figure 9;
- Figure 10 shows a side plan view of a system according to a preferred embodiment of the invention which uses the hide handling device of Figure 1;
- Figure 11 shows a plan view of Figure 10;
- Figures 12A, 12B, 12C show a detail of the system of Figure 10 during successive steps of a first operating mode of the system of Figure 10;
- Figures 13A, 13B show two operating steps of the system of Figure 10 in the first operating mode;
- Figure 13C shows an enlarged detail of Figure 13B;
- Figures 14A, 14B, 14C show a detail of the system of Figure 10 during successive steps of a second operating mode of the system;
- Figures 15A, 15B show two operating steps of the system of Figure 10 in the second operating mode;
- Figure 15C shows an enlarged detail of Figure 15B;
- Figures 16A, 16B, 16C show a detail of the system of Figure 10 during successive steps of a third operating mode of the system;
- Figures 17A, 17B show two operating steps of the system of Figure 10 in the third operating mode;
- Figures 18A, 18B, 18C show a detail of the system of Figure 10 during successive steps of a fourth operating mode of the system;
- Figures 19A, 19B show two operating steps of the system of Figure 10 in the fourth operating mode;
- Figure 20 shows an axonometric view of a system according to another preferred embodiment of the invention which uses the handling device of Figure 1;
- Figure 21 shows a first side plan view of Figure 20;
- Figure 22 shows a second side plan view of Figure 20;
- Figure 23 shows a sectional view of a first variant embodiment of the element of Figure 7;
- Figure 24 shows a sectional view of a second variant embodiment of the element of Figure 7.

### DETAILED DESCRIPTION OF PREFERRED EMBODIMENTS OF THE

### PRESENT INVENTION

Even though the present invention is described below with reference to its embodiments illustrated in the drawings, the present invention is not limited to the embodiments described below and illustrated in the drawings.

On the contrary, the embodiments described herein and illustrated in the drawings clarify some aspects of the present invention, the scope of which is defined in the claims.

The present invention can be especially but not exclusively applied in the leather tanning sector for the processing of natural leather. More specifically, the hide handling device can be advantageously used in a system, as described in detail below, between a hide storage station and a hide thickness measuring/detection unit, or thickness gauge.

It should, however, be underlined that the use of the handling device is not limited to said application. On the contrary, the present invention can be conveniently applied in a system where the hides need to be moved between two or more areas.

A first embodiment of the hide handling device 1 according to the present invention is described below with reference to Figures from 1 to 9. For the sake of illustration simplicity, in the continuation of the present description the hide handling device 1 can be even referred to simply with the term "device 1".

The hide handing device 1 according to the invention is essentially defined by gripping means 12 suited to grip the hide and moving means 10 suited to move the gripping means 12.

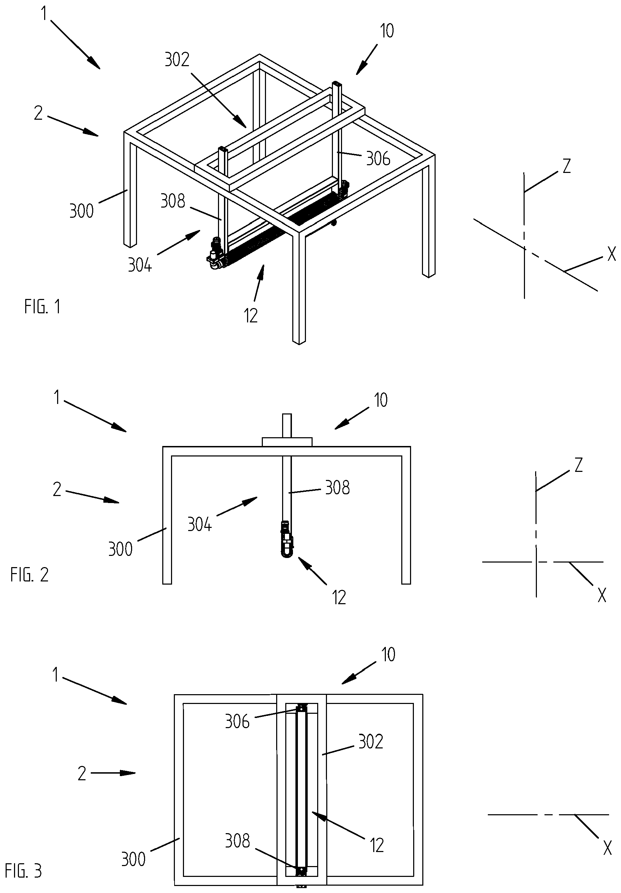

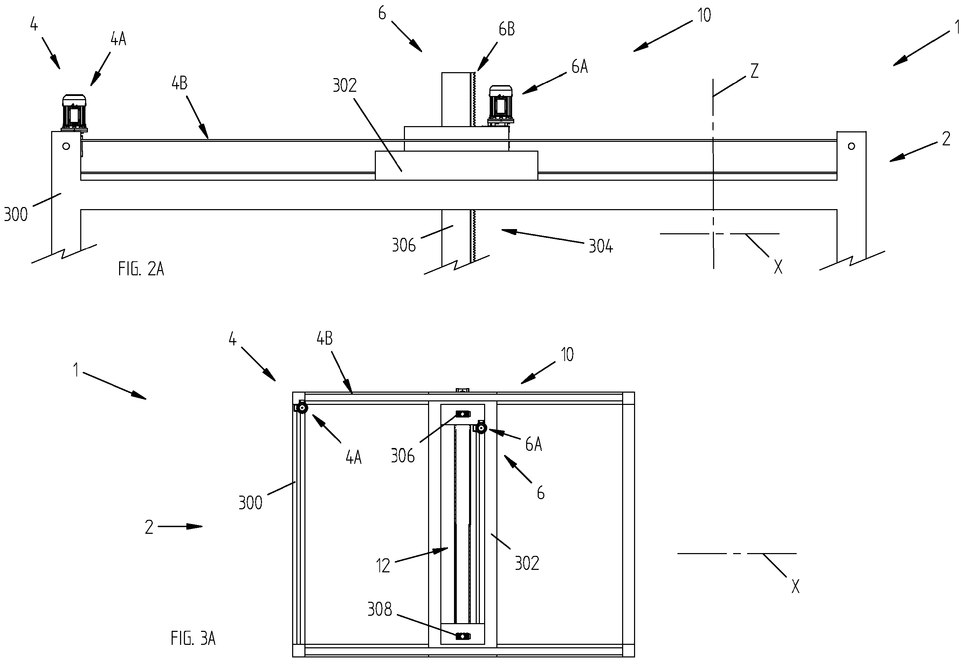

The moving means 10 preferably comprise a supporting structure 2 and motorized means 4, 6 suited to move the gripping means 12 along at least one direction. For the sake of illustration simplicity, the motorized means 4, 6 are shown only in Figures 2A and 3A, and are described in greater detail below.

The moving means 10 allow the movement to take place preferably along a first axis X which defines a horizontal direction and preferably along a second axis Z which defines a vertical direction.

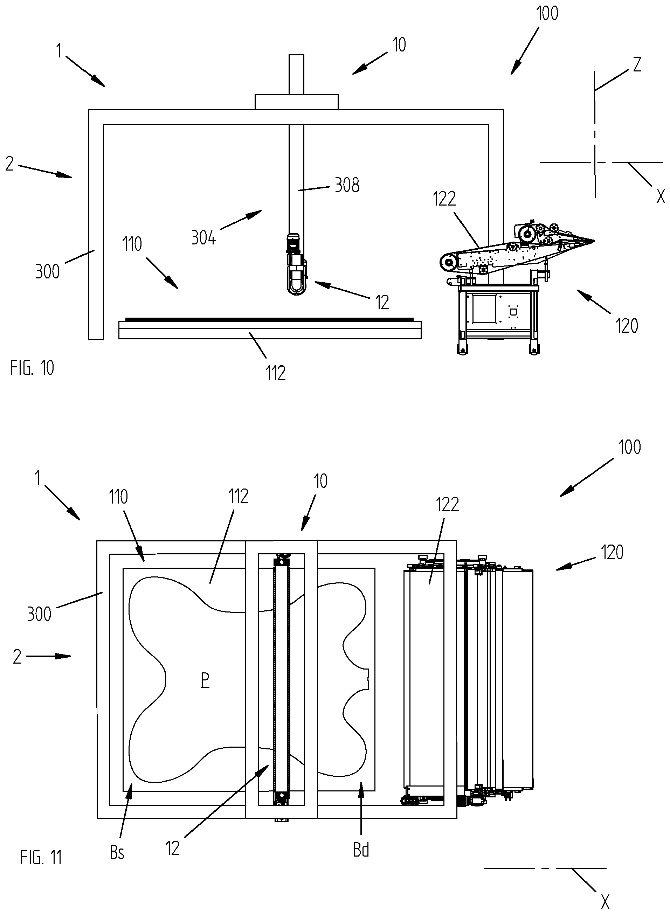

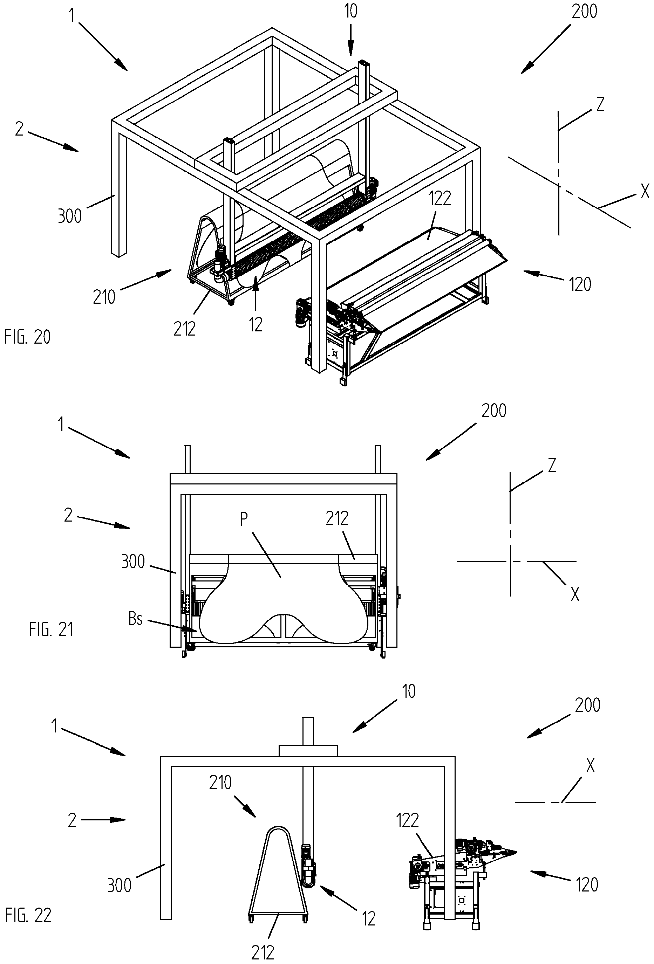

Said two movements preferably allow the device 1 to be used inside a system as shown, for example, with reference to Figures 10 and 20.

For example, as described in greater detail below with reference to Figures from 10 to 19, the device 1 according to the invention is used inside a system 100 to collect a hide P and move it from a hide storage area 110 to a measuring station 120 where the parameters of the hide are measured (for example, a hide thickness measuring/detection unit, or thickness gauge). The measuring station 120 shown in the figures is of the type known per se and therefore is not described in detail here below. It is worth noting that preferably there is a conveyor belt 122 that receives the hide and makes it advance towards the actual measuring/detection area.

The same can be said with reference to Figures from 20 to 22, in which the device 1 according to the invention is used inside a system 200 to collect a hide and move it from a hide storage area 210 to a measuring station 120 where the parameters of the hide are measured (for example, a hide thickness measuring/detection unit 120, or thickness gauge).

The difference between the two systems 100, 200 lies in the different configuration of the storage area 110, 210.

In the first case, the storage station 110 comprises a plurality of hides stacked on a substantially horizontal supporting area, for example a machine bed 112.

In the second case, the storage station 210 comprises a plurality of hides stacked on a stand 212.

As is known, the hides are supported at the level of their central area, while their side edges hang laterally along more or less inclined directions defined by the specific shape of the stand 212 used.

In both systems 100, 200 the moving means 10 are shaped to allow, preferably, the movement along a first axis X that defines a horizontal direction and along a second axis Z that defines a vertical direction, as explained above (two-dimensional movement).

The movements along said two axes X, Z, that is, movements of the forward-backward and up-down type, are sufficient to move the hides in said systems from the storage area 110, 210 to the measuring/detection unit 120, more preferably to move them until the conveyor belt 122 of the measuring/detection unit 120.

In variant embodiments, however, the moving means can be shaped in a different manner to allow the movement to take place along several axes conveniently distributed in space (for example, three-dimensional movements) and possibly even along a single axis, for example along a single rectilinear direction.

The supporting structure 2 preferably comprises a casing 300 (Figure 1) resting on the floor. It is possible to identify a first structure 302 movable along the axis of movement X and supporting a second structure 304 movable along the axis of movement Z.

The first movable structure 302 is preferably defined by a frame moved by the first motorized means 4. Said first motorized means 4, shown in Figures 2A and 3A, preferably comprise a motor driven kinematic mechanism, preferably a belt-pulley kinematic mechanism. Preferably, it is possible to identify a first motor 4A integral with the casing 300 and a belt 4B, fixed to the first movable structure 302, moved by a pulley (not shown in the figures) associated with the first motor 4A.

The second movable structure 304 preferably comprises a first movable upright 306 and a second movable upright 308, both preferably moved by the second motorized means 6. Said second motorized means 6, shown in Figures 2A and 3A, preferably comprise a motor driven kinematic mechanism, preferably a rack-pinion kinematic mechanism. Preferably, it is possible to identify a second motor 6A integral with the first movable structure 302 and a rack 6B, fixed to the first movable upright 306 and meshing with a pinion (not shown in the figures) which is moved by the second motor 6A.

The lower ends 306A, 308B of the movable uprights 306, 308 support said gripping means 12, as described in detail below.

According to the preferred embodiment illustrated in Figures from 1 to 9, the gripping means 12 preferably comprise a tubular element 14 suited to define an inner cavity 16 and having a portion of external surface 18 suited to be positioned, through the moving means 10, at the level of the hide to be handled. The tubular element 14 develops longitudinally along a main rotation axis X1 and comprises a plurality of through holes 20 suited to place the external surface 18 in communication with the inner cavity 16.

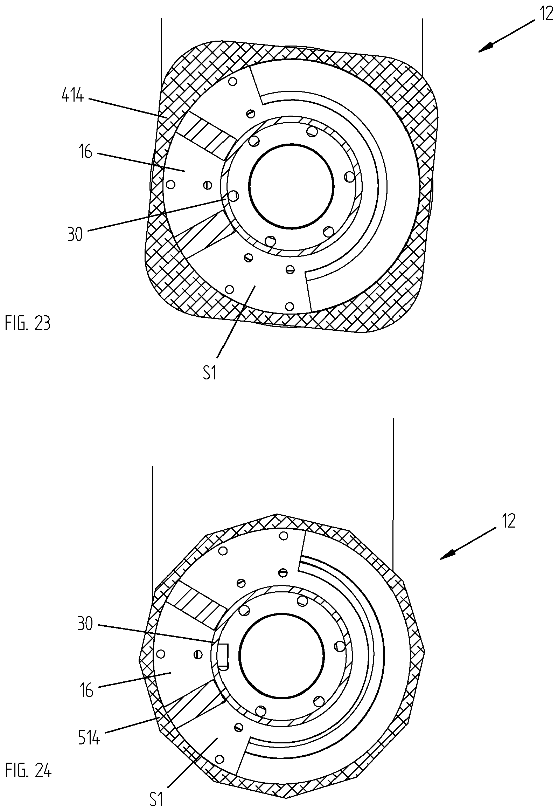

More preferably, the tubular element 14 is constituted by a hollow cylinder and therefore its external surface is cylindrical in shape. In variant embodiments, as shown for example in Figures 23 and 24, the tubular element 414, 514 can have a different shape and, preferably, its external surface can have a non-cylindrical shape such as, for example, the shape of a parallelogram with square base and preferably rounded corners (Fig. 23) or the shape of a prism with dodecagonal base and preferably rounded corners (Fig. 24).

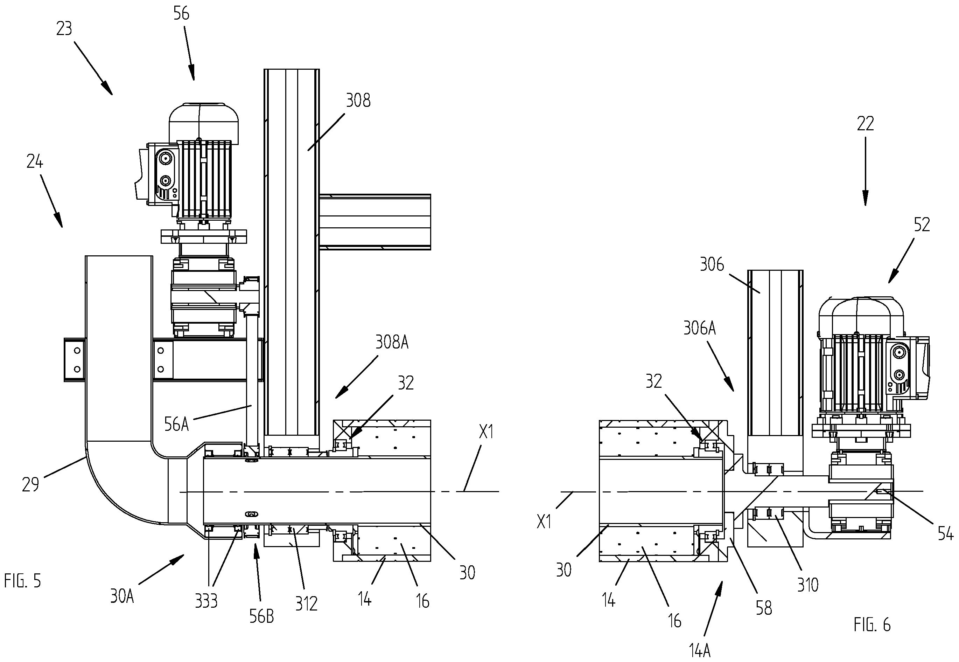

First rotation means 22, better described below with reference to Figure 6, allow the tubular element 14 to rotate around the main axis X1.

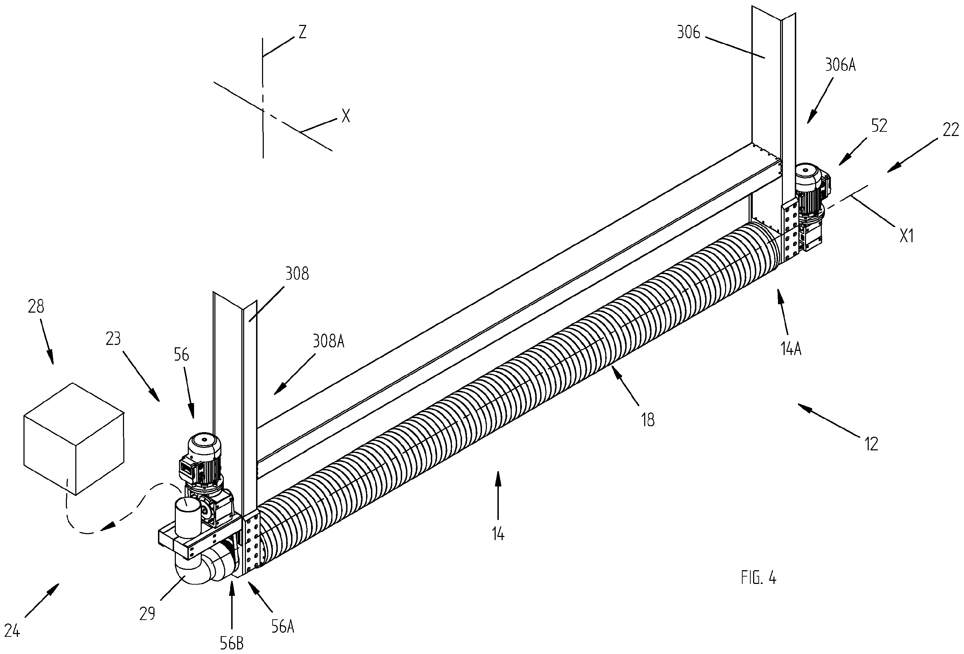

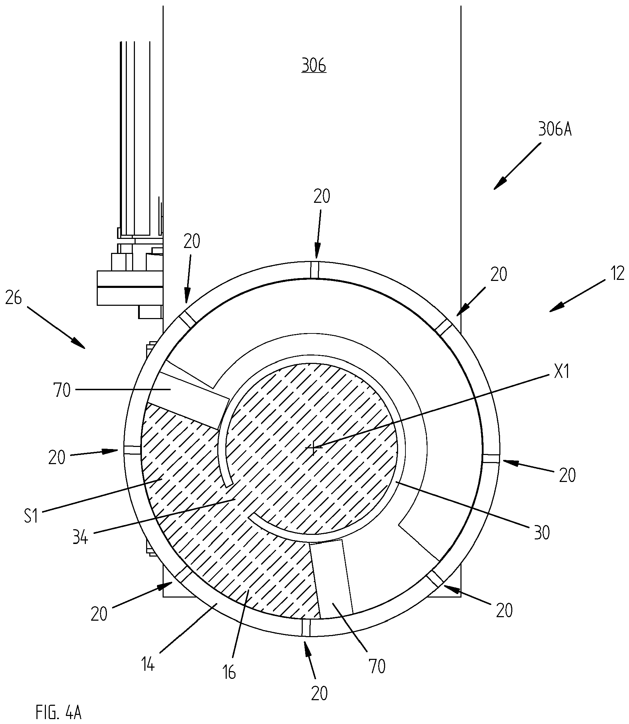

According to an aspect of the present invention, the device 1 comprises air suction means 24, shown by way of example only in Figure 4, which are suited to act in said inner cavity 16 of the tubular element 14 to define a plurality of negative pressure areas on the external surface 18 of the tubular element 14 by means of the air sucked through the thorough holes 20. When the external surface 18 of the tubular element 14 is positioned at the level of the hide P, the negative pressure areas serve the function of gripping the hide P and holding it on the tubular element 14.

The hide P is therefore gripped and held on the external surface 18 of the tubular element 14.

The function of gripping the hide P is carried out even when the tubular element 14 is set rotating.

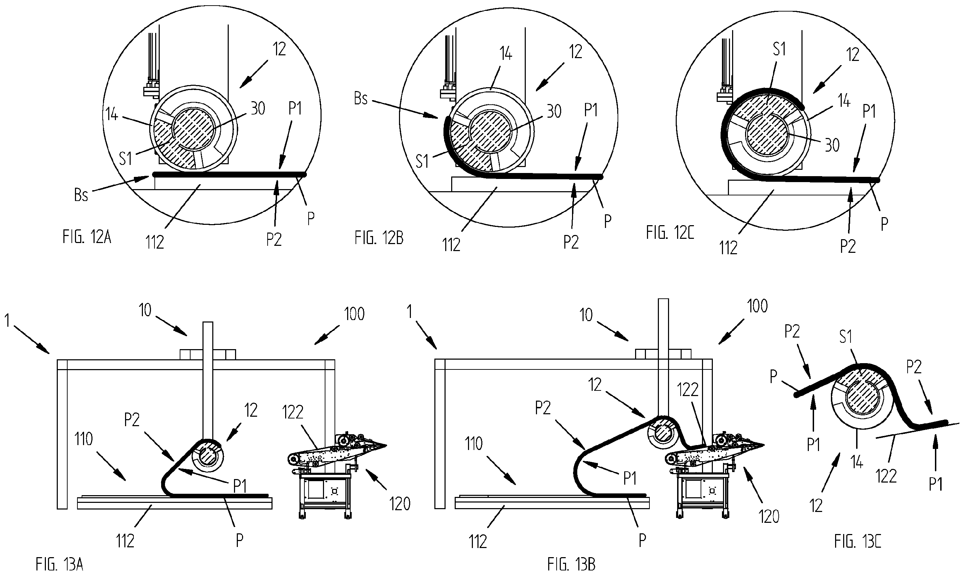

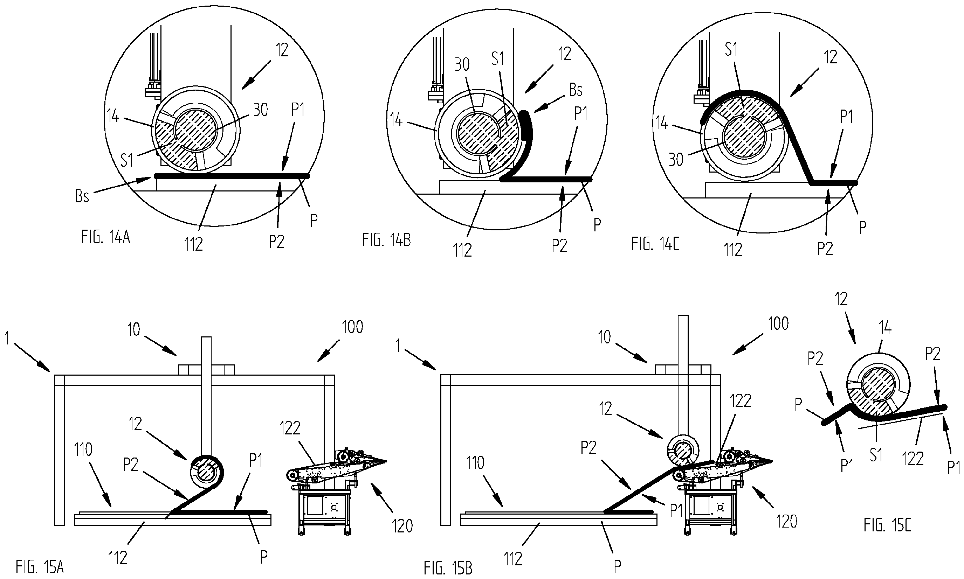

In this case, in addition to the gripping function, the rotation of the tubular element 14 also serves the function of rolling up and displacing the hide P for at least one section around its external surface 18, as shown for example in Figures 13C and 15C which illustrate some operating steps of the device 1.

According to another aspect of the present invention, the negative pressure areas on the external surface 18 extend on the external surface 18 of the tubular element 14 over a sector S1 smaller than 360°.

In this regard, preferably, the device 1 is provided with air confining means 26 associated with the suction means 24 suited to define said suction sector S1 around the longitudinal axis X1 and inside the inner cavity 16. The suction sector S1 clearly extends over an angle that is smaller than 360°.

For example, as shown in Figure 4A, the suction sector S1 around the longitudinal axis X1 of the tubular element 14 extends over an angle equal to 120°.

The hide P is thus gripped and held onto the external surface 18 of the tubular element 14 over an area corresponding to that of the suction sector S1.

In the case where the tubular element 14 rotates, too, the hide P is preferably gripped and moved on the external surface 18 of the tubular element 14 over an area corresponding to that of the suction sector S1, smaller than 360°, thus preventing the hide from rolling up and overlapping on the tubular element 14. Therefore, during operation, if the tubular element 14 rotates, the hide P is gripped/held and handled around the tubular element 14 over an angle equal to 120°. Outside said sector S1, the hide P is not subjected to any negative pressure effect by the tubular element 14 and is not gripped/held onto the external surface 18 (and therefore can be released, as shown for example in Figures 13C and 15C).

The tubular element 14 and the terminal areas of the same are shown in detail in Figures from 5 to 9.

The tubular element 14 is set rotating around a central supporting shaft 30, preferably a hollow central shaft. The central supporting shaft 30 develops longitudinally along the main rotation axis X1 and is coaxial with and internal to the tubular element 14.

The inner cavity 16 is preferably defined between the tubular element 14 and the central supporting shaft 30.

The tubular element 14 can rotate with respect to the central supporting shaft 30 through suitable rolling means 32, preferably bearings (Figures 5 and 6).

The first rotation means 22, which allow the tubular element 14 to rotate around the main axis X1, are preferably associated with a first end 14A of the tubular element 14 (the right end 14A with reference to Figures 4 and 6).

The first end 14A of the tubular element 14 is preferably supported by the lower end 306A of the first movable upright 306.

Rolling means 310, preferably bearings, allow the tubular element 14 to rotate with respect to the first movable upright 306.

The first rotation means 22 suited to rotate the tubular element 14 around the main axis X1 preferably comprise a motor 52 integral with the first movable upright 306, more preferably an electric motor, suited to set a drive pin 54 rotating. The drive pin 54 is then connected to the tubular element 14 by means of a flange 58.

Second rotation means 23 allow the central shaft 30 to rotate around the main axis X1 independently of the tubular element 14 and are preferably associated with a first end 30A of the central shaft 30 (the left end 30A with reference to Figures 4 and 6).

The first end 30A of the central shaft 30 is preferably supported by the lower end 308A of the second movable upright 308.

Rolling means 312, preferably bearings, allow the central shaft 30 to rotate with respect to the second movable upright 308.

The second rotation means 23 suited to rotate the central shaft 30 around the main axis X1 preferably comprise a motor 56 integral with the second movable upright 308, a belt 56A and a pulley 56B integral with the central shaft 30. The pulley 56B is set rotating by said belt 56A.

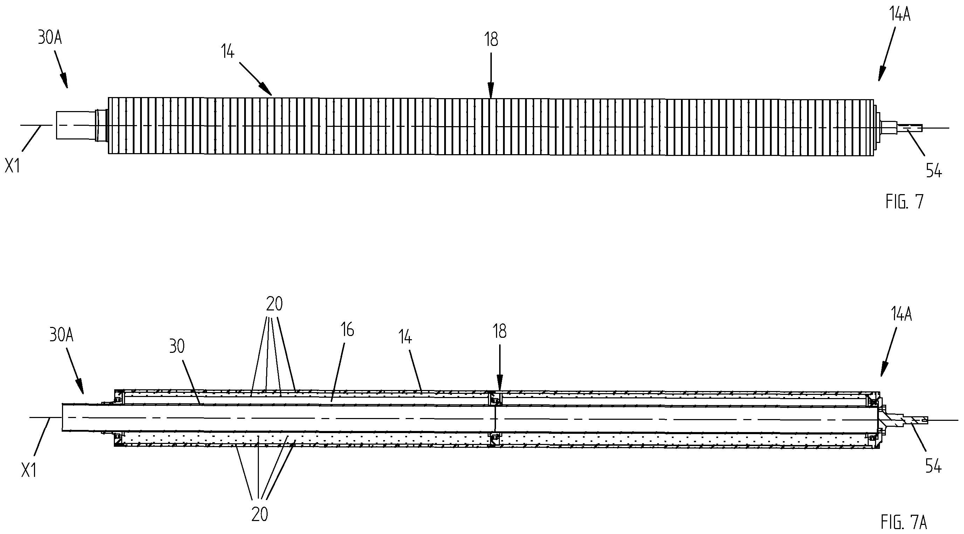

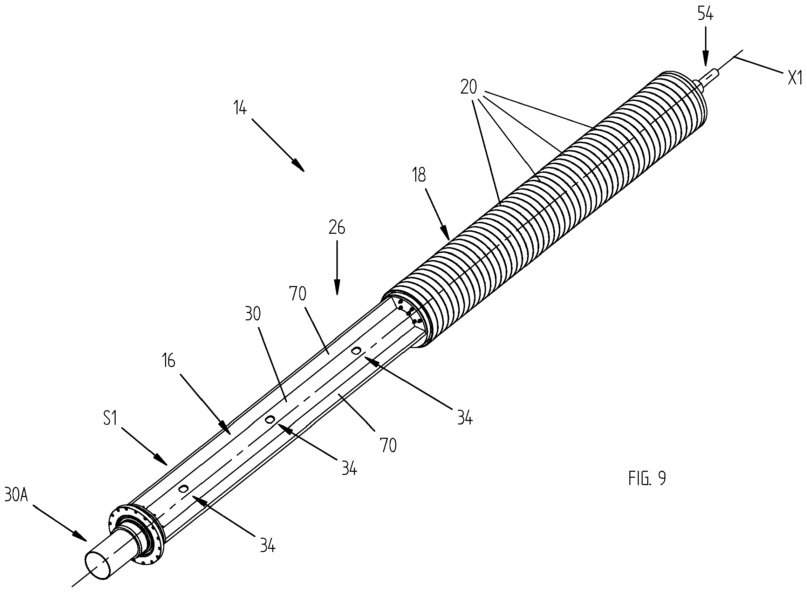

In the embodiment illustrated, the tubular element 14 and the central shaft 30 are carried out in a modular manner using two respective parts conveniently joined at the centre, as can be seen in Figures 7A and 9. In variant embodiments, the tubular element can be made in a single piece or even using more than two modules.

The suction means 24 acting on said inner cavity 16 of the tubular element 14 preferably comprise one or more through openings 34 defined on the hollow central shaft 30, as can be seen in Figures 4A and 9. Said through openings 34 place the inner cavity 16 in communication with the inside of the central shaft 30. Preferably, the left end 30A of the hollow central shaft 30 can be connected to a suction unit 28, for example a suction pump schematically shown in Figure 4.

A coupling 29, integral with the second movable upright 308, is preferably associated with the left end 30A of the central hollow shaft 30 to facilitate the connection with the suction unit 28.

Rolling means 333, preferably bearings, allow the hollow central shaft 30 to be rotated with respect to the coupling 28.

The hollow central shaft 30 substantially serves as a suction pipe to create the suction air flow in the inner cavity 16 and the negative pressure areas on the external surface 18 of the tubular element 14 by means of the through suction holes 20.

The air confining means 26 suited to define the suction sector S1 are defined in the inner cavity 16, as can be seen again in Figure 9, and preferably comprise delimiting elements/partitions 70 mutually positioned to form the angle desired for the sector S1.

Preferably, said delimiting partitions 70 can be adjusted to define the operating angle desired for the sector S1 from time to time.

The air confining means 26 are preferably integral with the hollow central shaft 30. The rotation of the latter, therefore, determines the corresponding rotation of the air confining means 26.

Therefore, through the second rotation means 23, the central shaft 30 and the air confining means 26 can be rotated around the main axis X1 and therefore the sector S1 is consequently rotated and positioned as desired with respect to the tubular element 14, as better described below.

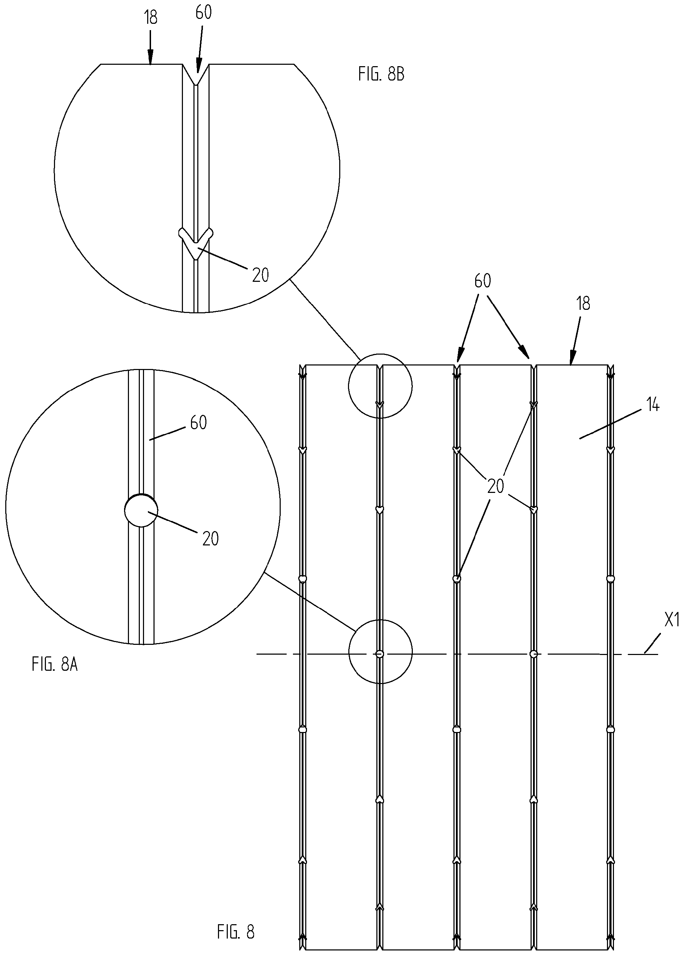

A further advantageous aspect of the present invention, related to the efficiency in gripping the hide P on the external surface 18 of the tubular element 14, is described with reference to Figures 8, 8A and 8B.

As shown in the figures, the external surface 18 of the tubular element 14 comprises a plurality of grooves 60. Preferably, the through holes 20 are distributed on the tubular element 14 in such a way that they end into said grooves 60. Advantageously, the negative pressure area generated by the air sucked through the through holes 20 extends along each groove 60. Advantageously, the area where the hide P is gripped/held through adhesion on the external surface 18 of the tubular element 14 is in turn extended, thus increasing the holding and stretching efficiency.

In the preferred embodiment illustrated in the figures, the grooves 60 extend rectilinearly on the external surface 18 of the tubular element 14, in a perpendicular direction with respect to the main axis X1.

In preferred variant embodiments, however, the grooves can extend according to different directions and/or development patterns, for example according to a not necessarily rectilinear development pattern and/or along inclined directions with respect to the main axis, for example a groove which defines a helicoidal development pattern around the external surface 18 or one or more crossing or irregular grooves.

In a further preferred variant embodiment, moreover, the external surface of the tubular element may be without grooves, that is, substantially smooth.

The negative pressure areas suited to hold the hide are therefore located at the points of the external surface of the tubular element where the through holes end.

Figures from 10 to 19 show the hide handling device 1 inside a system 100, as described above, and possible operating modes for collecting and moving one hide at a time from the storage station 110 to the measurement station 120.

The storage station 110 comprises a plurality of hides stacked on a machine bed 112. For the sake of illustration simplicity, only the upper hide P to be moved from the machine bed 112 to the conveyor belt 122 of the measuring/detection unit 120 is shown.

The hide P is arranged on the machine bed 112 in such a way that it has a first side P1 facing upwards and a second side P2 facing downwards.

For example, as is known in the leather tanning sector, the hide P has a grain side and a flesh side. The hides can therefore be stored on the machine bed with the grain side facing upwards or downwards, that is, with the grain side coinciding with the first side P1 or with the second side P2 of the hide P according to the explanation provided above.

Figures 12A, 12B, 12C, 13A and 13B show a first method for moving a hide P from the machine bed 112 to the conveyor belt 122 of the measuring/detection unit 120.

According to said method, the hide P is collected from the machine bed 112 by its first side P1 facing upwards and is positioned on the conveyor belt 112 with the first side P1 facing downwards, that is, actually the hide P is moved and at the same time overturned.

Thus, the steps are the following:
- through the moving means 10, the tubular element 14 is moved to the left edge Bs of the hide P and at the level of its first side P1, or upper side P1 (Figure 12A);
- the suction means 24 are activated and at the same time the tubular element 14 is rotated by a first angle (clockwise with reference to Figure 12B) so that the hide P is sucked and held on the external surface 18 of the tubular element 14 at the level of the suction sector S1 and rolled around the same surface 18 over said angle;
- maintaining the suction means 24 activated, the tubular element 14, the central shaft 30 and the confining means 26 are simultaneously rotated by a further second angle (clockwise with reference to Figure 12C) in such a way that the hide P is still held on the external surface 18 of the tubular element 14 at the level of the suction sector S1 and further rolled around the same surface 18. In this condition (Figure 12C), the hide P is firmly held on the external surface 18 of the tubular element 14 due to the effect of the negative pressure areas obtained through the suction means 24;
- from this condition in which the hide P is gripped and the suction means 24 activated, the tubular element 14 is moved vertically (movement along axis Z) and horizontally (movement along axis X) from the hide P gripping area up to above the conveyor belt 122 of the measuring/detection unit 120 (Figures 13A and 13B), carrying the hide P;
- from this final position (Figures 13B and 13C), the tubular element 14 is rotated (clockwise, especially with reference to Figure 13C) in such a way that the hide P is carried over a portion of revolution corresponding to the suction sector S1 and at the end of the suction sector S1 the hide P is released and rested on the conveyor belt 122. The tubular element 14 is preferably kept rotating as long as the entire hide P is carried onto the conveyor belt 122.

Figures 14A, 14B, 14C, 15A and 15B show a second method for moving a hide P from the machine bed 112 to the conveyor belt 122 of the measuring/detection unit 120.

Even according to this method, the hide P is collected from the machine bed 112 by its first side P1 facing upwards and is positioned on the conveyor belt 112 with its first side P1 facing downwards, that is, actually the hide P is moved and at the same time overturned.

Thus, the steps are the following:
- through the moving means 10, the tubular element 14 is moved to the left edge Bs of the hide P and at the level of its first side P1, or upper side P1 (Figure 14A);
- the suction means 24 are activated and at the same time the tubular element 14, the central shaft 30 and the confining means 26 are rotated by a first angle (counterclockwise with reference to Figure 14B) so that the hide P is sucked and held on the external surface 18 of the tubular element 14 at the level of the suction sector S1 and rolled around the same surface 18 over said angle;
- maintaining the suction means 24 activated, the tubular element 14, the central shaft 30 and the confining means 26 are simultaneously rotated by a further second angle (counterclockwise with reference to Figure 14C) in such a way that the hide P is still held on the external surface 18 of the tubular element 14 at the level of the suction sector S1 and further rolled around the same surface 18. In this condition (Figure 14C), the hide P is firmly held on the external surface 18 of the tubular element 14 due to the effect of the negative pressure areas obtained through the suction means 24;
- from this condition in which the hide P is gripped and the suction means 24 activated, the tubular element 14 is moved vertically (movement along axis Z) and horizontally (movement along axis X) from the hide P gripping area up to above the conveyor belt 122 of the measuring/detection unit 120 (Figures 15A and 15B), carrying the hide P;
- from this final position (Figures 15B and 15C), the tubular element 14 is rotated (counterclockwise, especially with reference to Figure 15C) in such a way that the hide P is carried over a portion of revolution corresponding to the suction sector S1 and at the end of the suction sector S1 the hide P is released and rested on the conveyor belt 122. The tubular element 14 is preferably kept rotating as long as the entire hide P is carried onto the conveyor belt 122.

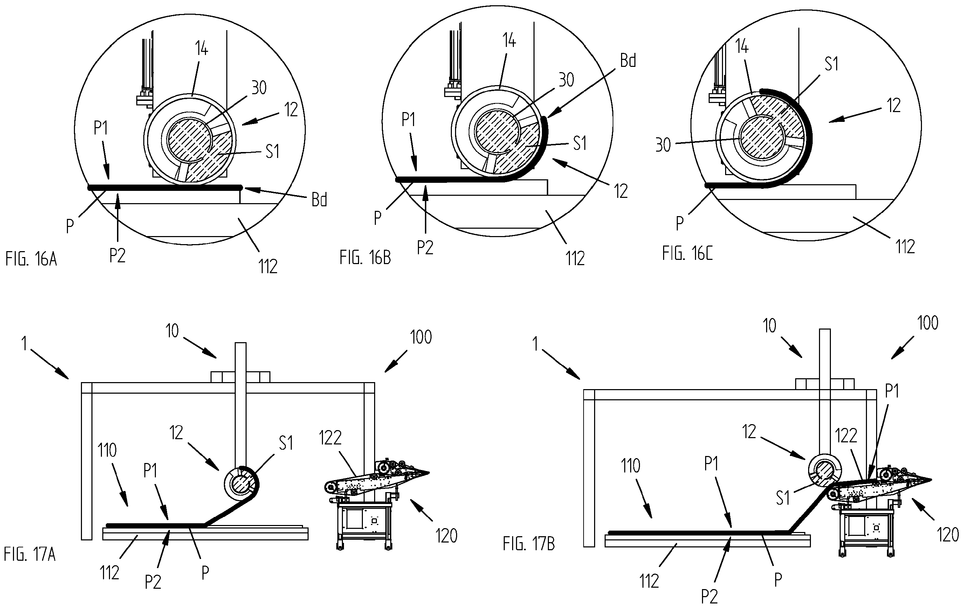

Figures 16A, 16B, 16C, 17A and 17B show a third method for moving a hide P from the machine bed 112 to the conveyor belt 122 of the measuring/detection unit 120.

According to said method, the hide P is collected from the machine bed 112 by its first side P1 facing upwards and is positioned on the conveyor belt 112 with its first side P1 still facing upwards, that is, actually the hide P is moved but not overturned as is the case with the two methods previously described.

Thus, the steps are the following:
- through the moving means 10, the tubular element 14 is moved to the right edge Bd (not the left edge Bs, as was previously the case) of the hide P and at the level of its first side P1, or upper side P1 (Figure 16A);
- the suction means 24 are activated and at the same time the tubular element 14 is rotated by a first angle (counterclockwise with reference to Figure 16B) so that the hide P is sucked and held on the external surface 18 of the tubular element 14 at the level of the suction sector S1 and rolled around the same surface 18 over said angle;
- maintaining the suction means 24 activated, the tubular element 14, the central shaft 30 and the confining means 26 are simultaneously rotated by a further second angle (counterclockwise with reference to Figure 16C) in such a way that the hide P is still held on the external surface 18 of the tubular element 14 at the level of the suction sector S1 and further rolled around the same surface 18. In this condition (Figure 16C), the hide P is firmly held on the external surface 18 of the tubular element 14 due to the effect of the negative pressure areas obtained through the suction means 24;
- from this condition in which the hide P is gripped and the suction means 24 activated, the tubular element 14 is moved vertically (movement along axis Z) and horizontally (movement along axis X) from the hide P gripping area up to above the conveyor belt 122 of the measuring/detection unit 120 (Figures 17A and 17B), carrying the hide P;
- from this final position (Figure 17B), the tubular element 14 is rotated (counterclockwise with reference to Figure 17B) in such a way that the hide P is carried over a portion of revolution corresponding to the suction sector S1 and at the end of the suction sector S1 the hide P is released and rested on the conveyor belt 122 (analogously to what is shown in Figure 15C). The tubular element 14 is preferably kept rotating as long as the entire hide P is carried onto the conveyor belt 122.

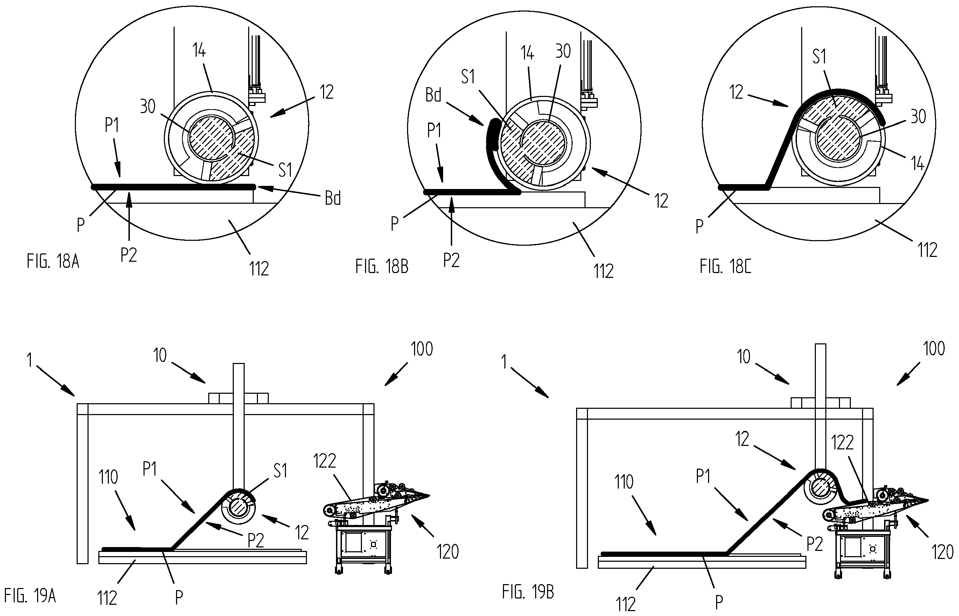

Figures 18A, 18B, 18C, 19A and 19B show a fourth method for moving a hide P from the machine bed 112 to the conveyor belt 122 of the measuring/detection unit 120.

Even according to said method, the hide P is collected from the machine bed 112 by its first side P1 facing upwards and is positioned on the conveyor belt 112 with its first side P1 still facing upwards, that is, actually the hide P is moved but not overturned.

Thus, the steps are the following:
- through the moving means 10, the tubular element 14 is moved to the right edge Bd of the hide P and at the level of its first side P1, or upper side P1 (Figure 18A);
- the suction means 24 are activated and at the same time the central shaft 30 and the confining means 26 are rotated by a first angle (clockwise with reference to Figure 18B) so that the hide P is sucked and held on the external surface 18 of the tubular element 14 at the level of the suction sector S1 and rolled around the same surface 18 over said angle;
- maintaining the suction means 24 activated, the tubular element 14, the central shaft 30 and the confining means 26 are simultaneously rotated by a further second angle (clockwise with reference to Figure 18C) in such a way that the hide P is still held on the external surface 18 of the tubular element 14 at the level of the suction sector S1 and further rolled around the same surface 18. In this condition (Figure 18C), the hide P is firmly held on the external surface 18 of the tubular element 14 due to the effect of the negative pressure areas obtained through the suction means 24;
- from this condition in which the hide P is gripped and the suction means 24 activated, the tubular element 14 is moved vertically (movement along axis Z) and horizontally (movement along axis X) from the hide P gripping area up to above the conveyor belt 122 of the measuring/detection unit 120 (Figures 19A and 19B), carrying the hide P;
- from this final position (Figure 19B), the tubular element 14 is rotated (clockwise, especially with reference to Figure 19B) in such a way that the hide P is carried over a portion of revolution corresponding to the suction sector S1 and at the end of the suction sector S1 the hide P is released and rested on the conveyor belt 122 (analogously to what is shown in Figure 13C). The tubular element 14 is preferably kept rotating as long as the entire hide P is carried onto the conveyor belt 122.

The handling methods described above can be applied in a substantially equivalent manner to collect and move one hide at a time from the storage area 210 to the measuring area 120 inside the system 200 shown with reference to Figures from 20 to 22, where the hides are stacked on the machine bed 112. The left edge Bs or the right edge Bd of the hide P on top of the stack created on the stand 212, in fact, can be gripped in a way similar to that described above with reference to collection from a machine bed 112.

In a preferred embodiment, the hide handling device according to the invention is also preferably provided with detection means suited to locate the position of the hide. Said detection means advantageously make it possible to correctly position the tubular element at the level of the hide edges, for example of the left or the right edge according to the description provided above, and to guarantee the correct alignment of the tubular element on the hide during operation.

The detection means preferably comprise systems such as dimming photocells (emitter and receiver or reflector) or cameras.

Advantageously, according to the description provided above, the hide gripping system obtained through the tubular element makes it possible to act only on one side of the hide itself, for example side P1 as described above. Therefore, the hide is not subjected to surface compression forces which can negatively affect its intrinsic characteristics and damage it.

Advantageously, according to the description provided above, the tubular element of the gripping means makes it possible to effectively hold and move the hide.

Advantageously, the device according to the invention makes it possible to handle the hide thanks to an embodiment with reduced overall dimensions compared to the systems of the known type.

It has thus been shown, through the preceding detailed description of the embodiments of the hide handling device illustrated in the drawings, that the device according to the present invention makes it possible to achieve the set objects. More specifically, the device according to the present invention makes it possible to obtain a hide handling device which acts in the least invasive manner against the surfaces of the hide to be handled.

Even though the present invention has been illustrated above through the detailed description of its embodiments represented in the drawings, the present invention is not limited to the embodiments represented in the drawings and described above.

On the contrary, the scope of the present invention is defined in the claims.

## Claims

1. Device (1) for handling a hide (P), comprising gripping means (12) suited to grip said hide (P) and moving means (10) suited to move said gripping means (12), **wherein** said gripping means (12) comprise:
- a tubular element (14; 414; 514) suited to define an inner cavity (16) and having a portion of external surface suited to be positioned at the level of said hide (P) through said moving means (10), said tubular element (14; 414; 514) developing longitudinally along a main rotation axis (X1) and comprising at least one through hole (20) suited to place said external surface (18) in communication with said inner cavity (16);
- first rotation means (22) for rotating said tubular element (14; 414; 514) around said main axis (XI);
- air suction means (24) suited to act in said inner cavity (16) of said tubular element (14; 414; 514) in order to define at least one negative pressure area on said external surface (18) through said at least one through hole (20), said negative pressure area defining a gripping surface for said hide (P);
- air confining means (26) associated with said air suction means (24) and suited to define a suction sector (S1) that extends over an angle smaller than 360° around said main axis (X1) and inside said inner cavity (16); wherein said moving means (10) comprise a supporting structure (2) and motorized means (4, 6) suited to move said gripping means (12) along at least one direction (X, Z);
the device (1) **characterized in that** said at least one direction (X, Z) comprises at least one of the directions that define a two-dimensional or three-dimensional space.

2. Device (1) according to claim 1, **characterized in that** said motorized means (4, 6) comprise at least one motor driven kinematic mechanism (4A, 6A) associated with a respective direction of movement, said at least one motor driven kinematic mechanism preferably comprising a rack and pinion system or a belt and pulley system.

3. Device (1) according to any of the preceding claims, **characterized in that** it comprises detection means suited to detect the presence of the hide (P), preferably dimming photocells or a camera.

4. Device (1) according to any of the preceding claims, **characterized in that** it comprises a central supporting shaft (30) around which said tubular element (14; 414; 514) can rotate.

5. Device (1) according to claim 4, **characterized in that** said central shaft (30) is hollow and comprises one or more through openings (34), said central shaft (30) defining a suction pipe.

6. Device (1) according to claim 5, **characterized in that** said suction pipe (30) can be connected to a suction unit (28), more preferably one end (30A) of said suction pipe (30) can be connected to a suction unit (28).

7. Device (1) according to any of the claims from 4 to 6, **characterized in that** it comprises second rotation means (23) for rotating said central supporting shaft (30).

8. Device (1) according to any of the preceding claims, **characterized in that** said at least one negative pressure area corresponds to the area of said external surface (18) where said at least one through hole (20) ends.

9. Device (1) according to any of the preceding claims, **characterized in that** said external surface (18) comprises at least one groove (60) which communicates with said at least one through hole (20), in such a way that said at least one negative pressure area extends on said groove (60).

10. Device (1) according to claim 9, **characterized in that** said at least one groove (60) extends on said external surface (18) according to a direction that is perpendicular with respect to said main axis (X1).

11. Device (1) according to claim 9, **characterized in that** said at least one groove extends on said external surface (18) in an inclined direction with respect to said main axis (Xl), preferably to define a helical development pattern of said at least one groove on said external surface (18).

12. Device (1) according to any of the preceding claims, **characterized in that** said tubular element (14) comprises a hollow cylinder (14).

13. Device (1) according to any of the claims from 6 to 12, **characterized in that** said suction unit (28) comprises a suction pump.

14. Device (1) according to any of the preceding claims, **characterized in that** the angle of said suction sector (S1) is adjustable.

15. System (100; 200) comprising a device (1) for handling a hide (P) between a first area and a second area of said system (100; 200), **characterized in that** said device (1) is made according to any of the preceding claims.

## Patentansprüche

1. Vorrichtung (1) zum Handhaben einer Haut (P), umfassend Greifmittel (12), die geeignet sind, die Haut (P) zu greifen, und Bewegungsmittel (10), die geeignet sind, die Greifmittel (12) zu bewegen, **wobei** die Greifmittel (12) umfassen:
- ein rohrförmiges Element (14; 414; 514), das dazu geeignet ist, einen inneren Hohlraum (16) zu definieren, und das einen Abschnitt der Außenfläche aufweist, der dazu geeignet ist, durch das Bewegungsmittel (10) auf der Höhe der Haut (P) positioniert zu werden, wobei sich das rohrförmige Element (14; 414; 514) in Längsrichtung entlang einer Hauptdrehachse (X1) entwickelt und mindestens ein Durchgangsloch (20) umfasst, das dazu geeignet ist, die Außenfläche (18) in Verbindung mit dem inneren Hohlraum (16) zu bringen;
- erste Rotationsmittel (22) zum Drehen des rohrförmigen Elements (14; 414; 514) um die Hauptachse (X1);
- Luftansaugmittel (24), die dazu geeignet sind, in dem inneren Hohlraum (16) des rohrförmigen Elements (14; 414; 514) zu wirken, um mindestens einen Unterdruckbereich auf der Außenfläche (18) durch das mindestens eine Durchgangsloch (20) zu definieren, wobei der Unterdruckbereich eine Greiffläche für die Haut (P) definiert;
- Lufteinschlussmittel (26), die mit den Luftansaugmitteln (24) verbunden und dazu geeignet sind, einen Saugsektor (S1) zu definieren, der sich über einen Winkel von weniger als 360° um die Hauptachse (XI) und innerhalb des inneren Hohlraums (16) erstreckt; wobei die Bewegungsmittel (10) eine Stützstruktur (2) und motorisierte Mittel (4, 6) umfassen, die dazu geeignet sind, die Greifmittel (12) entlang mindestens einer Richtung (X, Z) zu bewegen;
wobei die Vorrichtung (1) **dadurch gekennzeichnet ist, dass** die mindestens eine Richtung (X, Z) mindestens eine der Richtungen umfasst, die einen zweidimensionalen oder dreidimensionalen Raum definieren.

2. Vorrichtung (1) nach Anspruch 1, **dadurch gekennzeichnet, dass** die motorisierten Mittel (4, 6) mindestens einen motorgetriebenen kinematischen Mechanismus (4A, 6A) umfassen, der einer jeweiligen Bewegungsrichtung zugeordnet ist, wobei der mindestens eine motorgetriebene kinematische Mechanismus vorzugsweise ein Zahnstangen- und Ritzelsystem oder ein Riemen- und Scheibensystem umfasst.

3. Vorrichtung (1) nach einem der vorstehenden Ansprüche, **dadurch gekennzeichnet, dass** sie Detektionsmittel umfasst, die dazu geeignet sind, das Vorhandensein der Haut (P) zu detektieren, vorzugsweise dimmende Fotozellen oder eine Kamera.

4. Vorrichtung (1) nach einem der vorstehenden Ansprüche, **dadurch gekennzeichnet, dass** sie eine zentrale Stützwelle (30) umfasst, um die sich das rohrförmige Element (14; 414; 514) drehen kann.

5. Vorrichtung (1) nach Anspruch 4, **dadurch gekennzeichnet, dass** die zentrale Welle (30) hohl ist und eine oder mehrere Durchgangsöffnungen (34) umfasst, wobei die zentrale Welle (30) ein Saugrohr definiert.

6. Vorrichtung (1) nach Anspruch 5, **dadurch gekennzeichnet, dass** das Saugrohr (30) mit einer Saugeinheit (28) verbunden werden kann, bevorzugter kann ein Ende (30A) des Saugrohrs (30) mit einer Saugeinheit (28) verbunden werden.

7. Vorrichtung (1) nach einem der Ansprüche 4 bis 6, **dadurch gekennzeichnet, dass** sie zweite Rotationsmittel (23) zum Drehen der zentralen Stützwelle (30) umfasst.

8. Vorrichtung (1) nach einem der vorstehenden Ansprüche, **dadurch gekennzeichnet, dass** der mindestens eine Unterdruckbereich dem Bereich der Außenfläche (18) entspricht, wo das mindestens eine Durchgangsloch (20) endet.

9. Vorrichtung (1) nach einem der vorstehenden Ansprüche, **dadurch gekennzeichnet, dass** die Außenfläche (18) mindestens eine Nut (60) umfasst, die mit dem mindestens einen Durchgangsloch (20) in Verbindung steht, so dass sich der mindestens eine Unterdruckbereich auf der Nut (60) erstreckt.

10. Vorrichtung (1) nach Anspruch 9, **dadurch gekennzeichnet, dass** sich die mindestens eine Nut (60) auf der Außenfläche (18) in einer Richtung erstreckt, die senkrecht in Bezug auf die Hauptachse (X1) verläuft.

11. Vorrichtung (1) nach Anspruch 9, **dadurch gekennzeichnet, dass** sich die mindestens eine Nut auf der Außenfläche (18) in einer geneigten Richtung in Bezug auf die Hauptachse (X1) erstreckt, vorzugsweise um ein schraubenförmiges Entwicklungsmuster der mindestens einen Nut auf der Außenfläche (18) zu definieren.

12. Vorrichtung (1) nach einem der vorstehenden Ansprüche, **dadurch gekennzeichnet, dass** das rohrförmige Element (14) einen Hohlzylinder (14) umfasst.

13. Vorrichtung (1) nach einem der Ansprüche 6 bis 12, **dadurch gekennzeichnet, dass** die Saugeinheit (28) eine Saugpumpe umfasst.

14. Vorrichtung (1) nach einem der vorstehenden Ansprüche, **dadurch gekennzeichnet, dass** der Winkel des Saugsektors (S1) einstellbar ist.

15. System (100; 200) mit einer Vorrichtung (1) zur Handhabung einer Haut (P) zwischen einem ersten Bereich und einem zweiten Bereich des Systems (100; 200), **dadurch gekennzeichnet, dass** die Vorrichtung (1) nach einem der vorstehenden Ansprüche hergestellt ist.

## Revendications

1. Dispositif (1) de manipulation de peau (P), comprenant un moyen de préhension (12) adapté pour saisir ladite peau (P) et un moyen de déplacement (10) adapté pour déplacer ledit moyen de préhension (12), **dans lequel** ledit moyen de préhension (12) comprend :
- un élément tubulaire (14 ; 414 ; 514) adapté pour définir une cavité interne (16) et présentant une partie de surface externe adaptée pour être positionnée au niveau de ladite peau (P) par ledit moyen de déplacement (10), ledit élément tubulaire (14 ; 414; 514) se développant longitudinalement le long d'un axe de rotation principal (X1) et comprenant au moins un trou traversant (20) adapté pour mettre ladite surface externe (18) en communication avec ladite cavité interne (16) ;
- un premier moyen de rotation (22) pour faire tourner ledit élément tubulaire (14 ; 414 ; 514) autour dudit axe principal (X1) ;
- un moyen d'aspiration de l'air (24) adapté pour agir dans ladite cavité interne (16) dudit élément tubulaire (14 ; 414 ; 514) afin de définir au moins une zone de pression négative sur ladite surface externe (18) à travers ledit au moins un trou traversant (20), ladite zone de pression négative définissant une surface de préhension pour ladite peau (P) ;
- un moyen de confinement de l'air (26) associé audit moyen d'aspiration de l'air (24) et adapté pour définir un secteur d'aspiration (S1) qui s'étend sur un angle inférieur à 360° autour dudit axe principal (XI) et à l'intérieur de ladite cavité interne (16) ; dans lequel ledit moyen de déplacement (10) comprend une structure de support (2) et un moyen motorisé (4, 6) adapté pour déplacer ledit moyen de préhension (12) le long d'au moins une direction (X, Z) ;
le dispositif (1) **caractérisé en ce que** ladite au moins une direction (X, Z) comprend au moins l'une des directions qui définissent un espace bidimensionnel ou tridimensionnel.

2. Dispositif (1) selon la revendication 1, **caractérisé en ce que** ledit moyen motorisé (4, 6) comprend au moins un mécanisme cinématique motorisé (4A, 6A) associé à une direction de mouvement respective, ledit au moins un mécanisme cinématique motorisé comprenant de préférence un système de crémaillère et de pignon ou un système de courroie et de poulie.

3. Dispositif (1) selon l'une quelconque des revendications précédentes, **caractérisé en ce qu'**il comprend un moyen de détection adapté pour détecter la présence de la peau (P), de préférence des cellules photoélectriques à gradation ou une caméra.

4. Dispositif (1) selon l'une quelconque des revendications précédentes, **caractérisé en ce qu'**il comprend un arbre de support central (30) autour duquel ledit élément tubulaire (14 ; 414 ; 514) peut tourner.

5. Dispositif (1) selon la revendication 4, **caractérisé en ce que** ledit arbre central (30) est creux et comprend une ou plusieurs ouvertures traversantes (34), ledit arbre central (30) définissant un tuyau d'aspiration.

6. Dispositif (1) selon la revendication 5, **caractérisé en ce que** ledit tuyau d'aspiration (30) peut être connecté à une unité d'aspiration (28), plus préférablement une extrémité (30A) dudit tuyau d'aspiration (30) peut être connectée à une unité d'aspiration (28).

7. Dispositif (1) selon l'une quelconque des revendications 4 à 6, **caractérisé en ce qu'**il comprend un second moyen de rotation (23) pour faire tourner ledit arbre de support central (30).

8. Dispositif (1) selon l'une quelconque des revendications précédentes, **caractérisé en ce que** ladite au moins une zone de pression négative correspond à la zone de ladite surface externe (18) où se termine ledit au moins un trou traversant (20).

9. Dispositif (1) selon l'une quelconque des revendications précédentes, **caractérisé en ce que** ladite surface externe (18) comprend au moins une rainure (60) qui communique avec ledit au moins un trou traversant (20), de telle sorte que ladite au moins une zone de pression négative s'étend sur ladite rainure (60).

10. Dispositif (1) selon la revendication 9, **caractérisé en ce que** ladite au moins une rainure (60) s'étend sur ladite surface externe (18) selon une direction perpendiculaire par rapport audit axe principal (X1).

11. Dispositif (1) selon la revendication 9, **caractérisé en ce que** ladite au moins une rainure s'étend sur ladite surface externe (18) dans une direction inclinée par rapport audit axe principal (X1), de préférence pour définir un modèle de développement hélicoïdal de ladite au moins une rainure sur ladite surface externe (18).

12. Dispositif (1) selon l'une quelconque des revendications précédentes, **caractérisé en ce que** ledit élément tubulaire (14) comprend un cylindre creux (14).

13. Dispositif (1) selon l'une quelconque des revendications 6 à 12, **caractérisé en ce que** ladite unité d'aspiration (28) comprend une pompe d'aspiration.

14. Dispositif (1) selon l'une quelconque des revendications précédentes, **caractérisé en ce que** l'angle dudit secteur d'aspiration (S1) est réglable.

15. Système (100 ; 200) comprenant un dispositif (1) de manipulation d'une peau (P) entre une première zone et une seconde zone dudit système (100 ; 200), **caractérisé en ce que** ledit dispositif (1) est réalisé selon l'une quelconque des revendications précédentes.
